# EUROPEAN PATENT APPLICATION

(11) **EP 4 626 140 A1**
(43) Date of publication of application: **01.10.2025**
(21) Application number: 25165939.7
(22) Date of filing: 25.03.2025
(51) Int. Cl.: H05B 6/06, F24C 15/10

(54) **CONSISTENT BACK-TO-BACK RESULTS ON A COOKTOP**

(30) Priority: 26.03.2024 US 202418616405
(71) Applicant: Whirlpool Corporation, Benton Harbor, MI 49022 (US)
(72) Inventor: GIGANTE, ALESSANDRO, Benton Harbor, Michigan, 49022 (US); GALLIVANONI, ANDREA, Benton Harbor, Michigan 49022 (US); STIPE, COLLIN ANDREW, Benton Harbor, Michigan, 49022 (US); GASPARONI, ANDREA, Benton Harbor, Michigan, 49022 (US); MASI, DANIELE, Benton Harbor, Michigan, 49022 (US); PACIONI, ANNALISA, Benton Harbor, Michigan, 49022 (US); MUSSO, GIAN MAURO, Benton Harbor, Michigan, 49022 (US)
(74) Representative: Eisenführ Speiser

(57) **Abstract**

An induction cooktop is provided, including: a cooking zone configured to cause cookware to heat food items placed therein; a sensor configured to sense a temperature from which a cooking temperature of the cookware may be estimated; and control circuitry in communication with the sensor and configured to: determine the estimate of the cooking temperature of the cookware from the temperature sensed by the sensor; detect the insertion of a first food item into the cookware; determine a target temperature corresponding to the cooking temperature just prior to insertion of the first food item; detect when the first food item is removed from the cookware; after the first food item is removed, compare the cooking temperature to the target temperature; and determine a time of insertion for a second food item based on the cooking temperature stably reaching the target temperature after a removal of the first food item.

## Description

### BACKGROUND OF THE DISCLOSURE

The present disclosure generally relates to induction cooktops and more specifically to a user notification for an induction cooktop.

### SUMMARY OF THE DISCLOSURE

According to one aspect of the present disclosure, an induction cooktop is provided including: a plurality of induction coils configured to heat cookware; a power supply for supplying variable power levels to the plurality of induction coils in response to control signals such that the plurality of induction coils cause the cookware to heat food items on the cookware at a cooking temperature; a plurality of sensors configured to detect a temperature from which a cooking temperature on the cookware may at least be estimated; and control circuitry coupled to the power supply for generating the control signals identifying the induction coils to receive power. The control circuitry coupled to the plurality of sensors, the control circuitry configured to: (a) determine at least an estimate of the cooking temperature of the cookware from the temperature sensed by the sensors; (b) generate a notification to insert a food item when the cooking temperature is stable; (c) detect when the food item is inserted in the cookware; (d) detect when the food item is removed from the cookware; and (e) repeat (a) through (d) for each subsequently inserted food item.

According to another aspect of the present disclosure, an induction cooktop is provided including: at least one cooking zone configured to cause cookware to heat food items placed therein; a sensor configured to sense a temperature from which a cooking temperature of the cookware may at least be estimated; and control circuitry in communication with the sensor and configured to: determine at least an estimate of the cooking temperature of the cookware from the temperature sensed by the sensor; detect the insertion of a first food item into the cookware; determine a target temperature corresponding to the determined cooking temperature just prior to insertion of the first food item; detect when the first food item is removed from the cookware; after the first food item is removed, compare the determined cooking temperature to the target temperature; and determine a time of insertion for a second food item based on the determined cooking temperature stably reaching the target temperature after removal of the first food item.

According to yet another aspect of the present disclosure, a method is provided for cooking back-to-back food items on cookware using an induction cooktop, the induction cooktop including a plurality of induction coils and sensors, a user interface, and control circuitry for estimating a cooking temperature from the outputs of the sensors and controlling power supplied to the induction coils, the control circuitry configured to execute the method, which comprises: (a) generating a notification to insert a food item when the cooking temperature is stable; (b) detecting when the food item is inserted in the cookware; (c) detecting when the food item is removed from the cookware; and (d) repeating (a) through (c) for each subsequently inserted food item.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a graph showing an example of the cooking temperature of cookware on an induction cooktop as a function of time before, during and after cooking of a first food item;
FIG. 2 is an electrical circuit diagram in block form of an induction cooktop; and
FIG. 3 is a flowchart illustrating a method of using the induction cooktop shown in FIG. 2.

The components in the figures are not necessarily to scale, emphasis instead being placed upon illustrating the principles described herein.

### DETAILED DESCRIPTION

The present illustrated embodiments reside primarily in combinations of method steps and apparatus components related to an induction cooktop. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

For purposes of description herein, the specific devices and processes illustrated in the attached drawings and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

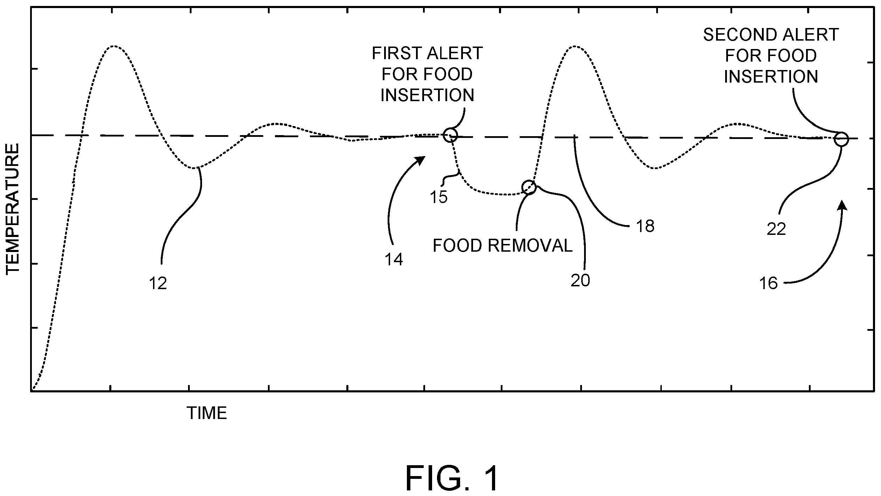

As noted above, the present disclosure relates to an induction cooktop. More particularly, it relates to a detection/notification system for use with an induction cooktop when cooking multiple food items back-to-back. For example, the detection/notification system may be used when sequentially cooking pancakes or steaks. As apparent from FIG. 1 and explained in more detail below, the temperature 12 of cookware on an induction cooktop can fluctuate considerably until stabilizing at a cooking temperature 18. When a first food item is added to the cookware, the cookware temperature drops 15. Then, once the first food item is done cooking and removed from the cookware at time 20, the temperature 12 of the cookware again fluctuates considerably before stabilizing at the cooking temperature 18. The time it takes for the temperature 12 of the cookware to stabilize may be longer than the time it takes to cook the first food item. Most people will add the second food item to the cookware very soon after removing the first food item, which can cause the second food item to cook too quickly or possibly burn. Alternatively, they may wait much longer than is necessary to add the second food item, which increases total cooking time, which may lead to frustration. In any event, the cooktop will not consistently cook food items back-to-back unless the cookware temperature is allowed to stabilize before a second food item is added to the cookware.

Some current induction cooktops are equipped with a temperature assist feature that notifies a user when cookware is preheated. However, such preheat notification occurs only initially when the pan is first heated and there is no assistance or notification provided with respect to any subsequent food items to be cooked. Further, if the user selects a manual cycle and power selection, the initial preheat notification may not even occur.

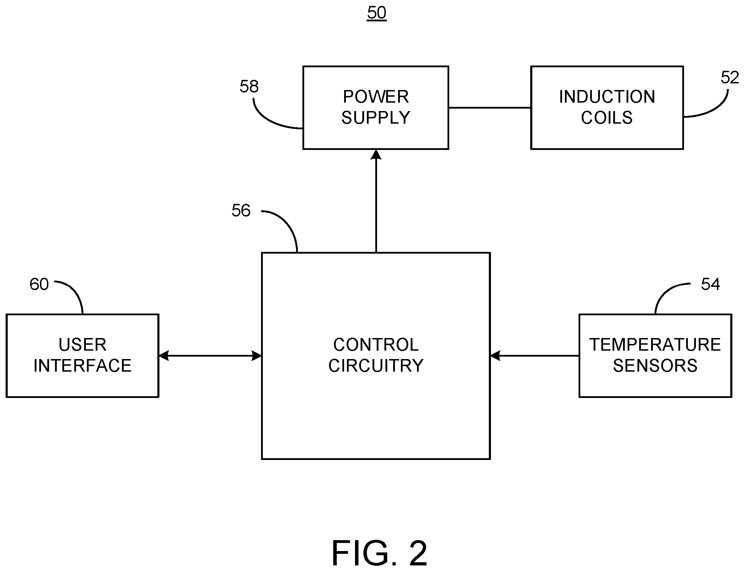

Referring to FIG. 2, reference numeral 50 generally designates an induction cooktop that is illustrated in block form to show its basic electrical components. The induction cooktop 50 includes at least one cooking zone (e.g., induction coil(s) 52) configured to cause cookware to heat a food item, at least one sensor 54 configured to detect a temperature from which a cooking temperature may at least be estimated for cooking a first food item on the cookware at a first time and a second food item on the cookware at a second time later than the first time, and control circuitry 56 in communication with the sensor 54. As used herein, "at least estimate a cooking temperature" means to either estimate the cooking temperature from an indirect measurement or to directly measure the cooking temperature on the cookware.

The sensor(s) 54 may be an infrared sensor, an image sensor, a thermocouple, a thermistor, or any other sensor for detecting temperature. Separate sensors 54 may be provided for each induction coil 52.

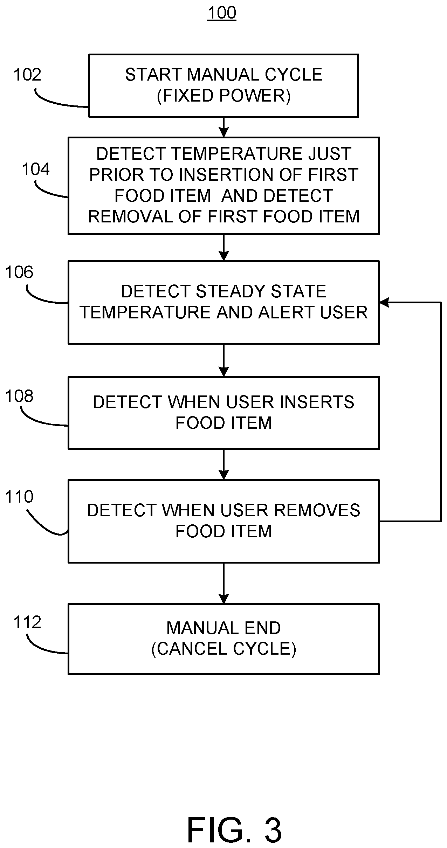

The control circuitry 56 may include any one or more of a processor, a memory, field programmable gate arrays, discrete logic devices, and other circuitry. Routines are stored in the memory and executable by the processor(s). One or more routines can relate to operations of the cooking elements. As explained below, the control circuitry 56 may execute a routine corresponding to the method shown in FIG. 3.

The induction cooktop 50 may further include a power supply 58 coupled to receive control signals from the control circuitry 56. The power supply 58 responds to the control signals for selectively supplying variable power to the induction coils 52. More specifically, the power supply 58 may comprise a driving circuit for each coil 52 controlled by the control circuitry 56. The driving circuits utilize a switching device (e.g. a solid-state switch) to generate a variable frequency/variable amplitude current to feed the induction coils 52. In this configuration, the induction coils 52 are driven such that an electromagnetic field is generated to cause the cookware to heat food items. The control circuitry 56 may select power levels represented in the control signals in response to the estimated cooking temperature.

The induction cooktop 50 may also include a user interface 60 coupled to the control circuitry 56. The user interface 60 may include a display, user inputs, tone generator or speaker, etc. The display may be a touchscreen display to also provide for entry of user inputs.

The control circuitry 56 may be configured to determine a time of insertion for the second food item based on stabilization of the estimated cooking temperature after removal of the first food item.

The control circuitry 56 may be configured to detect the removal of the first food item based on a change in the estimated cooking temperature or based on other sensed parameters. Further, the control circuitry 56 may be configured to communicate a signal indicating the estimated cooking temperature has stabilized. Such a signal may be supplied to the user interface 60 or may be transmitted to an external device such as a smart phone or to other appliances.

The control circuitry 56 may also be configured to alert a user to the estimated cooking temperature reaching a stable or a target temperature following removal of a prior food item. Such an alert may be issued by the user interface 60. Thus, the alert may be an audible alert such as a generated tone or voice message and/or may be a visual alert such as a message shown on the display of the user interface 60.

Not only may the control circuitry 56 generate an alert as to when subsequent food items may be inserted in the cookware, the control circuitry 56 may also initiate a countdown timer upon detection of removal of the food item and control the user interface 60 to display a remaining time until the time of insertion for a subsequent food item. The control circuitry 56 may determine a time to insertion that is determined by estimating the time to insertion based on any known temperature control method. The control circuitry 56 may then initiate the countdown timer from the estimated time to insertion.

There are multiple ways to detect such bulky foods insertion and removal. For example, the methods disclosed in EP4240108A1 and US20230280040A1 may be used. The entire disclosures of EP4240108A1 and US20230280040A1 are incorporated herein by reference. In those cases, the system can adjust temperature estimation by taking into account the presence/absence of the food. Knowing the food type (input from the user) can help even more in the accuracy of the temperature drop estimation.

Referring back to FIG. 1, the control circuitry 56 estimates the cooking temperature 12 for cooking a first food item at a first time 14 and a second food item at a second time 16 later than the first time (e.g., a "batch" cooking scenario). The control circuitry 56 is configured to compare the estimated cooking temperature 12 to a target temperature 18 to cook the food items, detect a removal of the first food item, and determine a time of insertion 22 for the second food item based on the cooking temperature 12 reaching the target temperature 18 and/or stabilizing after the removal of the first food item. The control circuitry 56 may also detect when the first food item was inserted into the cookware based on the sudden drop 15 in the estimated cooking temperature 12.

Having described the electrical components of the induction cooktop 50, a method 100 of operation will now be described with reference to FIG. 3. This method may be executed by the control circuitry 56. The method 100 may begin when a user selects a manual cycle at a particular power level (step 102). The control circuitry 56 then controls the inductive coils to cause the cookware to heat (step 104). Then, in step 106, the control circuitry 56 detects when the estimated cooking temperature is stable and then may optionally generate a notification to insert a food item. Next, the control circuitry 56 detects when a food item is inserted in the cookware (step 108). The control circuitry 56 may then detect when the food item is removed from the cookware (step 110). The control circuitry 56 repeats steps 106-110 for each subsequently inserted food item until a power off user input is received from the user interface 60 to end the manual cycle (step 112). It should be noted that the user may insert the first food item before the temperature is stable. In that case, the control circuitry 56 records the temperature at food insertion and uses that value as a reference point to alert the user for the insertion of subsequent food items. This ensures consistent cooking conditions for each sequentially cooked food item.

According to a first aspect of the present disclosure, an induction cooktop is provided including: at least one cooking zone configured to cause cookware to heat food items placed therein; a sensor configured to sense a temperature from which a cooking temperature of the cookware may at least be estimated; and control circuitry in communication with the sensor and configured to: determine at least an estimate of the cooking temperature of the cookware from the temperature sensed by the sensor; detect the insertion of a first food item into the cookware; determine a target temperature corresponding to the determined cooking temperature just prior to insertion of the first food item; detect when the first food item is removed from the cookware; after the first food item is removed, compare the determined cooking temperature to the target temperature; and determine a time of insertion for a second food item based on the determined cooking temperature stably reaching the target temperature after a removal of the first food item.

According to the first aspect of the present disclosure, the control circuitry may be configured to detect the removal of the first food item based on a change in the estimated cooking temperature.

According to the first aspect of the present disclosure, the control circuitry is configured to communicate a signal indicating the estimated cooking temperature reaching the target temperature.

According to the first aspect of the present disclosure, the control circuitry may initiate a countdown timer that displays a remaining time from removal of the first food item until the time of insertion for the second food item.

According to the first aspect of the present disclosure, the control circuitry may be configured to alert a user to the estimated cooking temperature becoming stable and reaching the target temperature.

According to the first aspect of the present disclosure, the alert may be audible.

According to the first aspect of the present disclosure, the alert may be visual.

According to the first aspect of the present disclosure, the at least one cooking zone may include at least one induction coil.

According to the first aspect of the present disclosure, the induction cooktop may further include a power supply coupled to receive control signals from the control circuitry, the power supply responds to the control signals for selectively supplying variable power to the at least one induction coil.

According to the first aspect of the present disclosure, the induction cooktop may further include a user interface coupled to the control circuitry for selecting power levels for the at least cooking zone.

According to a second aspect of the present disclosure, an induction cooktop is provided, including: a plurality of induction coils configured to heat cookware; a power supply for supplying variable power levels to the plurality of induction coils in response to control signals such that the plurality of induction coils cause the cookware to heat food items on the cookware at a cooking temperature; a plurality of sensors configured to detect a temperature from which a cooking temperature on the cookware may at least be estimated; and control circuitry coupled to the power supply for generating the control signals identifying the induction coils to receive power. The control circuitry coupled to the plurality of sensors, the control circuitry configured to: (a) determine at least an estimate of the cooking temperature of the cookware from the temperature sensed by the sensors; (b) generate a notification to insert a food item when the cooking temperature is stable; (c) detect when the food item is inserted in the cookware; (d) detect when the food item is removed from the cookware; and (e) repeat (a) through (d) for each subsequently inserted food item.

According to the second aspect of the present disclosure, the control circuitry may initiate a countdown timer upon detection of removal of the food item and control a user interface to display a remaining time until the time of insertion for a subsequent food item.

According to the second aspect of the present disclosure, the control circuitry may estimate a time to insertion, wherein the control circuitry initiates the countdown timer from the estimated time to insertion.

According to the second aspect of the present disclosure, the notification may be audible.

According to the second aspect of the present disclosure, the notification may be visual.

According to a third aspect of the present disclosure, a method is provided for cooking back-to-back food items on cookware using an induction cooktop, the induction cooktop including a plurality of induction coils and sensors, a user interface, and control circuitry for estimating a cooking temperature from the outputs of the sensors and controlling power supplied to the induction coils, the control circuitry configured to execute the method, which comprises: (a) generating a notification to insert a food item when the cooking temperature is stable; (b) detecting when the food item is inserted in the cookware; (c) detecting when the food item is removed from the cookware; and (d) repeating (a) through (c) for each subsequently inserted food item.

According to the third aspect of the present disclosure, a countdown timer may be initiated upon detection of removal of the food item and a remaining time until the time of insertion for a subsequent food item is displayed.

According to the third aspect of the present disclosure, a time to insertion may be estimated and the countdown timer may be initiated from the estimated time to insertion.

According to the third aspect of the present disclosure, the notification may be audible.

According to the third aspect of the present disclosure, the notification may be visual.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A method of cooking back-to-back food items on cookware using an induction cooktop, the induction cooktop including a plurality of induction coils and sensors, a user interface, and control circuitry for estimating a cooking temperature from the outputs of the sensors and controlling power supplied to the induction coils, the control circuitry configured to execute the method, which comprises:
(a) generating a notification to insert a food item when the cooking temperature is stable;
(b) detecting when the food item is inserted in the cookware;
(c) detecting when the food item is removed from the cookware; and
(d) repeating (a) through (c) for each subsequently inserted food item.

2. The method of claim 1, wherein a countdown timer is initiated upon detection of removal of the food item and a remaining time until the time of insertion for a subsequent food item is displayed.

3. The method of claim 2, wherein a time to insertion is estimated and the countdown timer is initiated from the estimated time to insertion.

4. The method of any one of claims 1-3, wherein the notification is audible.

5. The method of any one of claims 1-4, wherein the notification is visual.

6. The method of any one of claims 1-5, and further comprising:
determining a target temperature corresponding to the determined cooking temperature just prior to insertion of the food item;
after the food item is removed, comparing the determined cooking temperature to the target temperature; and
determining a time of insertion for a second food item based on the determined cooking temperature stably reaching the target temperature after a removal of the first food item.

7. The method of any one of claims 1-6, wherein the control circuitry is configured to detect the removal of the food item based on a change in the estimated cooking temperature.

8. The method of any one of claims 2-7, wherein the countdown timer displays a remaining time from removal of the food item until the time of insertion for the second food item.

9. An induction cooktop, comprising:
a plurality of induction coils configured to heat cookware;
a power supply for supplying variable power levels to the plurality of induction coils in response to control signals such that the plurality of induction coils cause the cookware to heat food items on the cookware at a cooking temperature;
a plurality of sensors configured to detect a temperature from which a cooking temperature on the cookware may at least be estimated; and
control circuitry coupled to the power supply for generating the control signals identifying the induction coils to receive power, the control circuitry coupled to the plurality of sensors, the control circuitry configured to:
(a) determine at least an estimate of the cooking temperature of the cookware from the temperature sensed by the sensors;
(b) generate a notification to insert a food item when the cooking temperature is stable;
(c) detect when the food item is inserted in the cookware;
(d) detect when the food item is removed from the cookware; and
(e) repeat (a) through (d) for each subsequently inserted food item.

10. The induction cooktop of claim 9, wherein the control circuitry initiates a countdown timer upon detection of removal of the food item and controls a user interface to display a remaining time until the time of insertion for a subsequent food item.

11. The induction cooktop of claim 10, wherein the control circuitry estimates a time to insertion, wherein the control circuitry initiates the countdown timer from the estimated time to insertion.

12. The induction cooktop of any one of claims 9-11, and further comprising:
determining a target temperature corresponding to the determined cooking temperature just prior to insertion of the food item;
after the food item is removed, comparing the determined cooking temperature to the target temperature; and
determining a time of insertion for a second food item based on the determined cooking temperature stably reaching the target temperature after a removal of the first food item.

13. The induction cooktop of any one of claims 9-12, wherein the notification is audible.

14. The induction cooktop of any one of claims 9-13, wherein the notification is visual.

15. The induction cooktop of any one of claims 9-14, wherein the control circuitry is configured to detect the removal of the food item based on a change in the estimated cooking temperature.
